(19) **Europäisches Patentamt / European Patent Office / Office européen des brevets**

(11) **EP 2 268 173 B1**

(12) **EUROPEAN PATENT SPECIFICATION**

(45) Date of publication and mention
of the grant of the patent:
**11.12.2013 Bulletin 2013/50**

(51) Int Cl.:
*A47J 31/44* *(2006.01)*     *A47J 31/46* *(2006.01)*
*A47J 43/12* *(2006.01)*     *A23P 1/16* *(2006.01)*

(21) Application number: **09717504.6**

(22) Date of filing: **04.03.2009**

(86) International application number:
**PCT/NL2009/050097**

(87) International publication number:
**WO 2009/110794 (11.09.2009 Gazette 2009/37)**

(54) **METHOD AND SYSTEM FOR DISPENSING A PRODUCT**

VERFAHREN UND SYSTEM ZUR AUSGABE EINES PRODUKTS

PROCÉDÉ ET SYSTÈME POUR DISTRIBUER UN PRODUIT

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **04.03.2008 NL 2001349**

(43) Date of publication of application:
**05.01.2011 Bulletin 2011/01**

(73) Proprietor: **Friesland Brands B.V.**
**3818 LE Amersfoort (NL)**

(72) Inventors:
• **WIJNEN, Maria Elisabeth**
**7425 GS Deventer (NL)**
• **BOTMAN, Maarten Joannes**
**7534 HA Enschede (NL)**
• **EBBEKINK, Jan Herman**
**7475 SJ Markelo (NL)**

• **SPELMANS, Luc Bart**
**B-3800 B-3800 Sint-truiden (BE)**
• **DRIESSEN, Hendrikus Jozef Bernardus Johannes**
**5715 AV Lierop (NL)**
• **POORTINGA, Albert Thijs**
**7331 AL Apeldoorn (NL)**
• **CLAUWAERT, Werner Marie Camiel**
**B-1702 Groot Bijgaarden (BE)**

(74) Representative: **Jansen, Cornelis Marinus et al**
**V.O.**
**Johan de Wittlaan 7**
**2517 JR Den Haag (NL)**

(56) References cited:
**EP-A- 1 625 812     WO-A-2006/078339**
**US-A- 4 560 570**

**Description**

The invention relates to a method and system for dispensing a product, for instance a milk product, milk, foam, cream or aerated dessert or a different product.

Such a system is known from practice in various variants. It is for instance known to contain a spray cream in an aerosol, which aerosol is manually operable for spraying the cream, see for instance European patent application EP 1 061 006A1. WO 2006/078339 analogously discloses a foamed milk system for creating foamed milk from a source of condensed milk, a source of water, and a source of pressurized air. Although highly user-friendly, spray cream is usually of poorer quality than whipped cream. Spray cream may be less stable than whipped cream; usually, the initial firmness of spray cream is less than that of whipped cream and furthermore decreases much more rapidly over time than the firmness of whipped cream. One of the causes of this is the absence of a stabilizing network of fat in spray cream. When making whipped cream, during whipping, a network of linked together fat globules (also called partial coalescence) is formed which contributes to the stability of the foam. The cream that is used for spray cream is usually desensitized to partial coalescence, so as to prevent particle coalescence from occurring before spraying through shaking of the aerosol and/or temperature fluctuations (which would lead to clogging of the aerosol). Another cause of the poorer stability of spray cream is the use of, for instance, nitrogen oxide for foaming the cream. Use of nitrogen oxide is often desired because owing to the high solubility of nitrogen oxide in the cream, with an acceptable pressure in the can, sufficient gas can be stored in the can. Here, the gas dissolved in the product is released upon spraying, resulting in highly aerated foam. In addition, the high dissolvability of nitrogen oxide enables the gas to diffuse relatively rapidly from the foamed product leading to a poorer stability.

A second drawback of the known spray cream is that during spraying, the quality of the spray cream is not constant: the gas content of the  initially sprayed cream may be higher than that of the finally sprayed cream, because during spraying, the pressure of the nitrogen oxide drops.

Automated whipped cream machines are known per se from practice and are provided with static or dynamic mixers for whipping cream. Advantages of whipped cream over spray cream are a different product quality (less aeration, higher firmness and better conservation of firmness over time). However, in general, the known whipped cream machines require much time for preparing the foamed product (compared to spray cream systems), are less user friendly (at least, difficultly operable), relatively less hygienic and therefore required frequent cleaning.

The present invention relates in particular to a method and system for dispensing a foamed product.

Dutch patent NL 1024433 describes a method for obtaining a monodisperse foam, wherein first, a relatively coarse prefoam is produced which prefoam is then passed through a membrane. Dutch patent NL1024438 describes a different method wherein different steam beams are spouted into a product, for instance via a beam divider in the form of a membrane.

The present invention contemplates an improved system and method, with which in particular a stably, foamed product can be obtained in a particularly efficient manner, with relatively inexpensive, durable and relatively low-energy means, whereby in particular a constant product quality is realized.

To this end, the invention provides a method for dispensing a foamed product, as claimed in claim 1.

Here, it is requested (in particular when a good, homogeneous foam is to be obtained) that the product downstream of the microfiltration device:

-    undergoes a mixing treatment; and/or
-    undergoes a controlled pressure decrease.

One embodiment according to the present disclosure further comprises a method for dispensing a non-homogeneously foamed product P, for instance cappuccino milk. To that end, it appears to be advantageous to supply gas via a microfiltration device to the product, without utilizing a downstream (relative to the microfiltration device) mixing treatment.

The gas mentioned can comprises for instance one or more gasses, or a gas mixture.

It has appeared that use of a microfiltration device for adding gas to the product can yield a highly stable, attractive foam, in particular of constant quality in a relatively simple manner. Furthermore, it appears with various foamable products that a particularly high overrun (degree of aeration) is obtained, at least a good overrun which is comparable to or better than the overrun obtained with the already known methods. A minimum overrun can be, for instance, approximately 100%, in particular approximately 150% and more particularly approximately 200 % (depending on the product and the use).

The method provided by the invention can provide foamed product in a very rapid, reliable and hygienic manner. The method can be utilized on a small or, conversely, on a large scale.

The product formed by the invention can furthermore give a particularly nice taste perception if the product is intended for consumption. Furthermore, a relatively compactly designed microfiltration device, and for instance a relatively inexpensive microfiltration device manufactured from disposable material (and/or dishwasher proof material) appears to already effect foam formation with high-quality foam.

The microfiltration device can be designed in different manners. This device comprises in particular a rigid wall, which separates a product feed-through space from a gas supply space. The filtration wall is preferably provided with a large number of flow-through channels (extending, for instance, straight through this wall, from the gas supply space to the product feed-through space), which channels are at least provided with relatively narrow outflow mouths (the channels can each also be narrow channels, this is, however, not required). In particular the filtration wall is rigid such that the wall does not deform under the influence of any pressure difference that may prevail during use between the product feed-through space and gas feed-through space, for instance a pressure difference of more than 1 bar (the pressures mentioned in this application are absolute pressures).

The product may be a food product, milk, cream, cappuccino milk, spray cream or dessert, in particular a milk product, or comprise a different product. In particular, in the present invention, upstream of the filtration device no prefoam is utilized, at least: a not yet foamed product (i.e. a product in substantially non-foamed condition) is supplied to the microfiltration device.

According to a further elaboration, the product is a homogeneously foamed product (an optionally monodisperse product foam). In addition, the product may be non-homogeneously foamed, for instance if the method leads to formation of a foam layer on the product (for instance cappuccino milk). As stated, in the latter case (i.e. supply of a non-homogeneously foamed product) no mixing treatment needs to be performed on the product provided with gas.

According to a further elaboration, it is advantageous when, downstream of the microfiltration device, the product undergoes a controlled pressure decrease. Here, the pressure of the product can in particular be gradually brought from a first pressure value to a second pressure value, with the first pressure value being higher than the second pressure value (a pressure difference between the first and second pressure may be at least 1 bar, or a smaller pressure difference). The first pressure can for instance be superatmospheric. The second pressure can for instance be substantially atmospheric pressure.

The pressure decrease can be effected by for instance a product processing device suitable to that end (i.e. a pressure reducer, pressure decreasing device). The processing device can be configured for, for instance, applying shear to the flowing product for the purpose of decreasing the pressure.

As a gradual pressure decrease is applied, whereby in a controlled manner shear is applied to the product, separation of the product can be well prevented or limited.

It appears that good results are obtained if the product undergoes a mixing treatment downstream of the microfiltration device, in particular for obtaining a homogeneous product foam. Here, it is especially advantageous when the mixing treatment is performed by a static mixing device. The mixing device can for instance be a product processing device, and appears to be able to effect a pressure decrease and shear on the product in a simple manner.

According to a further elaboration, the filtration device is provided with a filtration wall with gas-transmissive pores having a pore size in the range of 0.1-10 micron, in particular a pore size of at least 0.1 micron (in particular greater than 0.1 micron) and less than 2 microns (for instance less than 1 micron, and in particular less than 0.8 micron). Good results are obtained with a pore size in the range of approximately 0.2-0.8 micron, for instance approximately 0.5 micron. The product may flow along the filtration wall of the microfiltration device while the gas is supplied from a gas supply space to the pores, to be supplied via the pores to the product. More particularly, a pressure prevailing in the gas supply space can for instance be higher than a pressure of the product flowing along the filtration wall.

According to a further elaboration of the invention, the gas can be brought via the filtration device into the product under the influence of an (absolute) pressure of more than 2 bar, for instance a pressure in the range of more than 5 bar, in particular a pressure higher than 7 bar, for instance a pressure in the range of 8 - 15 bar.

The microfiltration device can be designed in different manners. Good results are obtained if the filtration device is provided with a microfiltration wall which separates a first space from a second space, wherein the product is supplied to the first space and the gas to the second space, or vice versa, such that the gas can be injected via the microfiltration wall into the product. Supply of product to the first space can be carried out by suitable fluid supply means, and supply of gas to the second space can be carried out by suitable gas supply means, which will be clear to the skilled person.

The filtration wall can have different configurations, and for instance be a tubular microfiltration wall, which separates a tube inner space from a tube outer space. In another elaboration, the filtration device is provided with a flat microfiltration wall (for instance membrane wall), while the product is passed along this wall on one side of the wall (through a first space) and the gas on the other side (on a second space) such that the gas is injected into the product via the microfiltration wall (in particular via pores comprised in the wall).

The invention further provides a product dispensing system as claimed in claim 10.

In this manner, the above-mentioned advantages can be obtained. The system is provided with a product processing device, for instance a mixing device, in particular a static mixer, which product processing device is disposed downstream of the microfiltration device. The product processing device can perform a mixing treatment for mixing the product, and/or have the product undergo a controlled pressure decrease, in particular for generating a homogeneous product foam.

The present system according to the invention is simple in use, relatively rapid, relatively reliable and robust (has preferably no moving parts), is easily cleanable and hygienic, while maintaining quality. Additionally, the system can be scaled well; the system can be of relatively small design (for instance with a microfiltration device whose largest dimension, for instance length, is smaller than 50 cm) or, conversely, of relatively large design (for instance with a microfiltration device whose largest dimension, for instance length, is greater than 1 m).

The present disclosure also provides a use of a microfiltration device, preferably in combination with a product processing device (for instance a pressure reducing device and/or a static mixing device), for foaming a product. In this manner, the product can be treated by a microfiltration device (with which fine gas bubbles can be introduced into the product) and preferably also a static mixing device, which appears to lead to a particularly stable foam product, utilizing means that can be designed relatively inexpensively.

A product processing device mentioned (for instance a static mixing device) can be designed in various manners. According to a further elaboration, this product processing device is designed for agitating product (provided with gas bubbles) flowing through this device and/or changing the course thereof (i.e. accelerating it, while the direction of the product velocity vector preferably changes a great many times). The product processing device is in particular not provided with moving parts, and can mix the product in a passive manner.

A product processing device mentioned (for instance static mixing device) can for instance be designed for holding substantially static obstructions (for instance substantially round obstructions, balls, marbles, flow velocity influencing walls or the like) in a flow path of the product, for treating the product (and in particular having it travel one or more non-straight paths through the product processing device).

The product provided with gas bubbles can for instance be thrust through/along the product processing device under the influence of a fluid pressure suitable thereto (in particular a superatmospheric pressure). This fluid pressure is preferably also utilized for supplying the product to (and in particular through) the microfiltration device.

A static mixing device mentioned can be designed in different manners, and for instance comprise a helical, cube-shaped or rhomboid mixer (provided with helical, cube-shaped or rhomboid product mixing walls), and/or be provided with through-flow space containing obstructions. The mixing device can for instance comprise a dispersive or distributive mixing device. It will be clear that the mixing device can also be designed differently.

One embodiment of the present disclosure, which embodiment can for instance be combined with one or more designs of the above mentioned embodiment, further contemplates a completely novel and improved system for dispensing a product, the product comprising, for instance, a milk product, foam, cappuccino milk, spray cream or aerated dessert, or a different product. In particular an especially user-friendly system and method are envisaged, with which the product can be dosed relatively accurately, an in a constant and hygienic manner.

According to the present disclosure, this is achieved by a system which is provided with:

- at least one product holder, provided with product to be dispensed, optionally with propellant, the holder being provided with product discharge means for discharging product from the holder under the influence of fluid supplied to the holder and/or under the influence of a pump; and
- an operating device designed to cooperate with the holder when this device and holder have been brought in a mutually cooperating position, the operating device being provided with operating means for operating the product discharge means, and with: a) fluid supply means for supplying the fluid mentioned to the holder, and/or b) a pump mentioned.

This system is a particularly user-friendly system, and can dispense product in a reliable, hygienic manner. Furthermore, the system can be of compact and robust design.

During use, a holder filled with product can simply be brought in the position for cooperation with the operating device. Then, the operating device can be used for dispensing the product, in desired dosages. Here, a suitable fluid can be supplied to the fluid entrance. Preferably, the fluid comprises ambient air but use of other fluids, for instance one or more gasses, steam, or even a liquid is not excluded.

The fluid supplied by the operating device to the holder can hold the holder (for instance an inner space thereof) at a desired pressure (in particular a superatmospheric, product expellant pressure), under the influence of which pressure the product can be dispensed via the discharge means. Here, in particular, the discharge means can serve as a valve means operable by the operating means, or operable sealing, for instance when the discharge means comprise a flexible hose, in order that product to be discharged comes into contact with relatively few parts of the system.

When the holder is emptied, at least when operating of the product discharge means no longer leads to dispensing of product, the holder can be replaced by a successive holder filled with product. The used holder may be reused (be refilled with product) or be discarded, recycled, or be otherwise disposed of.

According to a further elaboration, the holder is provided with a fluid entrance for supplying the fluid to an inner space surrounded by the holder for bringing this space at a desired product expelling pressure, the fluid supply means of the operating device being designed to cooperate with the fluid entrance of the holder for supply of fluid.

Further, the fluid supply means of the operating device can for instance be designed to supply fluid to a surrounding of the holder, for instance to a space enclosed between the holder and operating device, with the holder and the operating device in a position of cooperation.

According to a preferred embodiment, the product discharge means (of the holder) are designed to subject the product to a foam forming treatment during product discharge, in particular for providing a desired product foam. Such foam forming treatment can for instance comprise introduction of gas and/or agitation of the product (in particular introducing gas optionally followed by agitation of the product), which is, for instance, dependent on the composition of the product to be dispensed.

The product discharge means mentioned may be designed to introduce gas bubbles into the product, optionally to form a homogeneous foam. This may be advantageous if the product itself (when still in the holder) contains hardly any gas, if at all. According to a compact and efficient configuration, the product discharge means of the holder are connectable to a gas supply of the operating device, for supplying gas coming from this gas supply (also) to the product. More particularly, a product expelling fluid to be supplied to the holder can be a gas or gas mixture, of which at least a part is fed into the product for forming gas bubbles under the influence of the discharge means (in particular downstream of a product storage space of the holder).

It has appeared that particularly good results are obtained if the system (and in particular the product discharge means of the holder) is provided with both a microfiltration device and, disposed downstream thereof, a static mixing device for foaming the product (for instance homogeneously). In addition, the system may be provided with only a microfiltration device mentioned, or only a (static) mixing device.

Preferably, the filtration device and/or the product processing device (for instance mixing device) is/are integrated with the product discharge means. It is further advantageous if the product holder and the product discharge means thereof are manufactured from disposable material.

According to an advantageous embodiment, the product discharge means are provided with a flexible hose, manufactured from, for instance, an elastic or resilient material, and/or manufactured from, for instance, flexible plastic or a different suitable flexible (or even resilient) material. Such a hose can easily be brought in a position cooperating with the operating device, and can discharge product from the holder in a hygienic manner. Here, the operating means of the operating device are preferably designed to cooperate with the hose, in particular for squeezing tight a part of the hose in a first position and releasing it in a second position for stopping and allowing passage of the product, for the purpose of regulating product dispensing.

The product to be dispensed present in the holder can contain various products. The product can be homogeneously foamable, i.e. after foaming (when the product is a foamed product) foam bubbles are relatively homogeneously (i.e. uniformly) distributed in the product. Alternatively, no homogeneously foamed product is generated, wherein for instance a foam layer is formed on the product after dispensing of product (for instance cappuccino milk).

The product comprises, in particular, a food, for instance a product safe for human consumption. The product may comprise one or more of: milk, cream, spray cream, cappuccino milk, or a dessert (for instance a mousse forming product) or juice. The product can comprise a milk product, for instance cream. According to an alternative embodiment, the homogeneously foamable product comprises for instance a treating product and/or cosmetic product, for instance a product for personal hygiene, a hair product or the like.

As mentioned, the product still present in the holder can contain hardly any gas, if at all.

According to an alternative elaboration, the product present in the holder contains a gas or gas mixture, for instance a blowing agent, which blowing agent can effect foam formation in the product during dispensing of product. If the product is a food, the product present in the holder preferably contains no oxygen. Suitable blowing agents are for instance nitrogen oxide ($N_2O$), nitrogen ($N_2$), air, and/or carbon dioxide ($CO_2$), depending on the product to be dispensed. The operating device of the system may be designed to utilize such a blowing agent as expelling agent, and supply it to the holder for effecting dispensing of product. However, a fluid to be supplied by the operating device to the holder is preferably a blowing agent not yet present in the product, but, for instance, air or nitrogen.

According to a further elaboration of the invention, the operating device is designed to cool a holder (and preferably also at least a part of the product discharge means) in the position for cooperation, preferably such that the temperature of the product in the holder is less than 10°C (and in particular less than 5°C) and that the temperature of the product discharged during use is higher than 0°C. This is for instance advantageous if the product can decay at relatively high temperatures. Furthermore, the cooled product can form a relatively durable homogeneous foam.

In a further advantageous elaboration, the discharge means are an integral part of the holder, to prevent contamination of the content of the holder. The discharge means may be undetachably connected to the holder and can be discarded, recycled or be otherwise disposed of after use, with or without the holder. Alternatively, the discharge means are a separate part, and can for instance be separated from a used holder to then be provided on a following holder. In the latter case, the discharge means can for instance be of dishwasher proof material.

Of additional advantage is the further elaboration, with which the operating device is provided with a sealable cavity in which the holder can be detachably placed. Preferably, a cover is provided for sealing off the cavity. Here, the cover may be provided with a downstream part of the fluid supply means, in which case the holder is designed to cooperate with this downstream part of the fluid supply means for receiving the fluid with the holder placed in the cavity and the cover closed.

Further, according to one aspect, it is advantageous when in the pressure chamber of the holder a flexible bag is provided, which bag contains the product to be dispensed. In that case, also, suitable expelling agent can be provided in the bag, which can lead to good results and a stably dispensed product.

A further embodiment of the present disclosure provides a holder of a system according to the invention. The holder can serve for storage and transport of the homogeneously foamable product before the product is to be dispensed for use. For the purpose of product dispensing, the holder can be brought into a condition for cooperation with an operating device to receive fluid therefrom, for the purpose of the product to be dispensed.

The present disclosure furthermore offers an operating device of the system according to the invention, wherein the operating device can be brought into a cooperating condition with a holder for supplying fluid thereto, for the purpose of dispensing product.

The holders and holder operating devices mentioned can therefore be supplied separately from each other. The holders may be of relatively inexpensive compact and lightweight design and be disposable or reusable (refillable) after use, while the operating device can be used more than once for dispensing product from these holders.

The present disclosure further offers an advantageous method which is characterized by the features of claim 39.

The method uses a system according to the present disclosure, wherein, according to the method, a holder and operating device are brought in a position for mutual cooperation, in which the operating device supplies fluid to the holder (for instance for bringing the holder at a particular pressure), while the operating means can be brought from a first operating condition, in which product discharge via the product discharge means is prevented, to a second operating condition for discharging product via the discharge means.

According to a preferred embodiment, air is supplied to the holder for the purpose of expelling product from the holder. A further elaboration furthermore comprises the introduction of air (for instance via a microfiltration device) into the product, when the product is discharged by the product discharge means, for generating air bubbles in the product. In that case, use of a static mixer for mixing the product provided with air bubbles can be particularly advantageous for providing (optionally monodisperse) product foam. It is noted that the present invention is not limited to generating homogeneous or monodisperse foam.

Further elaborations of the invention are described in the subclaims. Presently, the invention will be clarified on the basis of an exemplary embodiment and the drawing. In the drawing:

Fig. 1 shows a schematic view of a system according to the invention;
Fig. 2 schematically shows an example of a microfiltration device;
Fig. 3 schematically shows an example of a static mixer;
Fig. 4 shows a schematic, exploded side view of an assembled system according to a second exemplary embodiment of the invention;
Fig. 5 shows a view similar to Fig. 4 of the operating device, in an opened position;
Fig. 6 shows a view similar to Fig. 4 of the product holder;
Fig. 7 schematically shows an exploded side view of an alternative elaboration of the product holder;
Fig. 8 show a further elaboration; and
Fig. 9 shows an alternative further elaboration.

In this application, identical or corresponding features are indicated with identical or corresponding reference numerals.

First exemplary embodiment

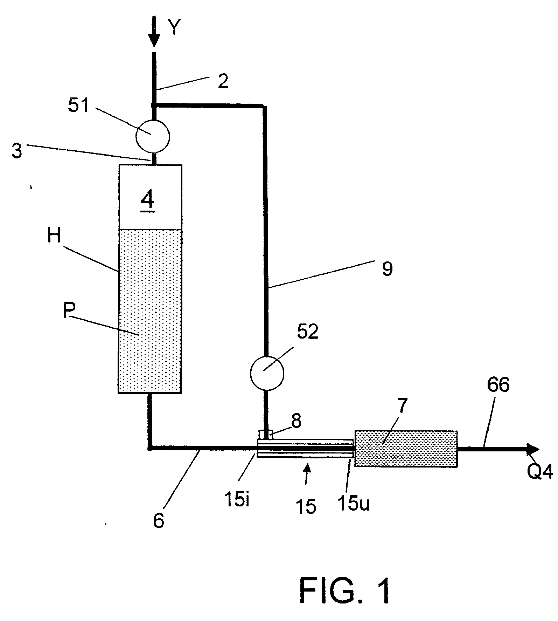

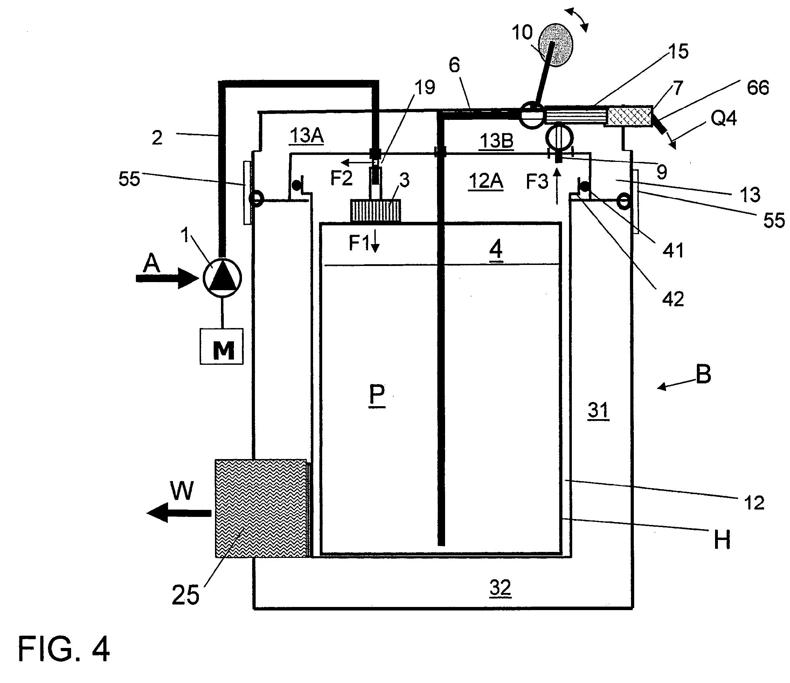

Fig. 1 schematically shows an example of a product dispensing system, comprising a holder H which contains a product P to be dispensed, and product discharge means 6 (for instance provided with a product discharge channel) for discharging product P coming from the holder H. The system shown in Fig. 1 may be utilized in an assembly as represented in Figs. 4 - 6, or otherwise.

The holder H can be designed and formed in different manners. For instance, an outer wall of the holder H can be manufactured from, for instance, metal, an alloy, plastic or the like. The outer wall can be of rigid or flexible design. The holder H may be cylindrical or angular, or of different design. The holder H can for instance be designed to withstand a maximum internal pressure of 12 bar, in particular 10 bar, for instance if the holder H is provided with a propellant (see hereinbelow). According to an advantageous elaboration, the holder H is designed to withstand a considerably lower maximum pressure, for instance at most 2 bar, so that the holder can be of relatively light (and for instance relatively simple, inexpensive) design.

According to an advantageous elaboration, the product P present in the holder is a homogeneously foamable product, and in particular a food, milk, cream, cappuccino milk, spray cream or dessert, juice, more particularly a milk product. The product P can for instance be cream. Optionally, the product P can contain a propellant or blowing agent (for instance in a condition at least partly dissolved in the product) in particular a propellant, consisting of one or more of: air, $N_2$, $N_2O$ and/or $CO_2$. Such a propellant or blowing agent is in particular safe with regard to food technology. The propellant or blowing agent can hold the inner space 4 for instance at a particular superatmospheric prepressure.

Furthermore, the product P can for instance not comprise a homogeneously foamable and/or consumable product P.

As shown in Fig. 1, the product discharge means 6 are advantageously provided with a microfiltration device 15, which is for instance connectable (via a gas inlet 8) to a fluid supply 9 for supplying gas to the product during product discharge. The microfiltration device 15 is furthermore provided with a product entrance 15i for receiving (not yet foamed) product P (for instance a product P not yet containing gas) coming from the holder H and discharge 6.

The system shown in Fig. 1 can further for instance be provided with regulating means 51, 52, for instance one or more operating valves, operating buttons and/or the like, for regulating gas supply and/or gas pressure, which will be clear to the skilled person. Operable valve means may be provided for regulating gas supply (or gas pressure) to the holder H. Operable valve means can for instance be provided for regulating gas supply (or gas pressure) to the microfiltration device 15.

Preferably, the product discharge means 6 are also provided with an optional product processing device, in this example comprising a mixing device 7 disposed downstream of the microfiltration device 15 for performing a mixing treatment on the product provided with gas. More particularly, the mixing device is a static mixer 7. The product processing device can also be designed otherwise. Preferably, this device is designed to enable controlled (in particular gradual) decrease of the excess pressure of the product from, for instance, a superatmospheric pressure to a lower, substantially atmospheric pressure.

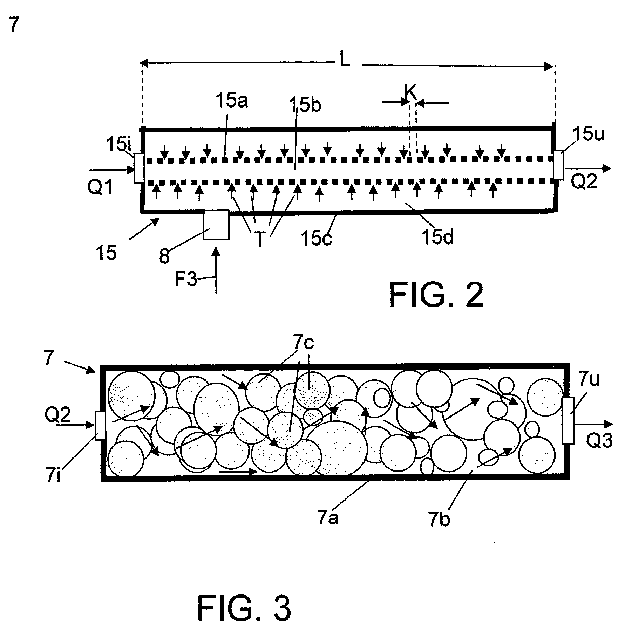

Figs. 2 and 3 show further, non-limitative elaborations of the filtration device 15 and mixing device 7, respectively, in further detail.

The microfiltration device 15 may be provided with a housing 15c comprising a product entrance 15i for supply of product P, a gas inlet 8 for supply of gas, and an exit 15u for discharge of product provided with gas. The gas inlet 8 may terminate in a gas receiving space 15d (i.e. a second space 15d) which is separated by means of a rigid (in particular not flexible) microfiltration wall 15a, (provided with gas transmissive pores) from the product entrance 15i and exit 15u. Furthermore, the wall 15a separates the gas supply space 15d from a product feed-through channel 15b (i.e. a first space 15b). The feed through channel 15b extends between the product entrance 15i and product exit 15u of the filtration device 15. Supply and discharge of product to/from the channel 15b is indicated with arrows Q1, Q2, respectively.

As mentioned, the microfiltration device 15 can be designed in different manners. In particular the filtration wall is so rigid that the wall does not deform under the influence of a pressure difference prevailing, during use, between the product feed-through space 15b and gas supply space 15d, for instance a pressure difference of more than 1 bar.

In the exemplary embodiment, the product feed-through channel 15b is located in the microfiltration wall 15a (at least is surrounded by that wall) and the gas supply space 15d outside thereof. Alternatively, the product feed-through channel 15 can be located just outside the microfiltration wall 15a, while the gas supply space 15d is formed by the space surrounded by this wall 15a.

The microfiltration wall 15a is for instance cylindrical, tubular, with, for instance, a circular cross section. According to a different elaboration, a length L of the wall 15a (in particular of said channel 15b) is at most 50 cm, in particular at most 20 cm, more particularly at most approximately 10 cm. This length L is for instance in the range of approximately 5 - 20 cm (a minimum length is for instance approximately 5 cm). The length L is in particular the length of the wall 15a measured in a product flow direction of product flowing during use along this wall (parallel to this wall 15a) from the product entrance 15i to the product exit 15u. The filtration device 15 (for instance microfiltration wall 15a) can also be dimensioned and formed differently, for instance a flat, curved, conical, angular, straight, convex viewed from the first space, concave viewed from the first space and/or a combination of these or other forms. A morphology of the wall 15a can for instance be homogeneous, sintered, cylindrically porous or sponge-shaped porous, be built up either symmetrically or a-symmetrically, comprise a combination of these configuration or be designed in a different manner.

The microfiltration wall 15a itself can be manufactured from different materials, for instance ceramic material, metal, plastic, an alloy or the like.

The microfiltration wall 15a is preferably provided with relatively narrow air transmissive pores (for instance air transmissive outflow channels, injection channels) in particular having a pore dimension K (in particular pore size measured at right angles to a pore flow-through direction, for instance a pore diameter see Fig. 2) in the range of 0.1-1- micron, in particular in the range of approximately 0.1-2 micron (for instance 0.1-1 micron). Good results are obtained if the pore size (or channel cross dimension) is in the range of approximately 0.1-0.5 micron, in particular 0.2 -0.8 micron, and is for instance approximately 0.5 micron.

This pore size/channel cross dimension K is in particular at least the size of a downstream part of the respective pore (outflow channel), for instance an outflow end thereof (which end bounds the product feed-through channel 15b mentioned); a part of the pore upstream relative to the pore outflow end can for instance have the same pore size (for instance diameter) as the outflow end, or a larger one.

The pores (outflow channels) in the wall 15a can all have substantially the same pore size, or different sizes which are in a predetermined pore size range, which will be clear to the skilled person. A pore size value can for instance be a pore size range comprising the value mentioned minus 50% (in particular 10%) up to the value plus 50% (in particular 10%).

A wall thickness of the microfiltration wall 15a can for instance be smaller than 1 cm, and is for instance in the range of 0.1-5 mm, in particular for instance 0.5-2 mm. According to a non-limitative example, if the device 15 is tubular, a tube outer diameter of this filtration device 15 can for instance be smaller than 10 cm, for instance smaller than 1 cm.

A cumulative pore surface of the pores in a surface of the wall 15a bounding the product flow-through channel 15b may be smaller than a remaining, closed part of this surface. In this wall surface the pores can further be distributed over the surface such that the circumferential edges of neighbouring pores are for instance at a mutual distance greater than a pore dimension K mentioned. A ratio between average pore size and average smallest nearest-neighbour distance (between neighbouring pores) can be in the range of approximately 1:1 - 1:50, in particular 1:2 - 1:20 or another ratio. Preferably, the pores are relatively uniformly distributed over the wall 15a, in regular or not in regular order.

Preferably, the microfiltration wall 15a is provided, preferably concentrically, in a hollow housing 15c of the filtration device 15 (see Fig. 2), which housing is provided with the gas inlet 8. Between an inside of the housing 15c and outside of the (in this case) tubular microfiltration wall 15a, is the intermediate space 15d for collecting air supplied via the inlet 8.

During use, the air present in the intermediate space 15d has a pressure of preferably over 2 bar, in particular higher than 5 bar, more particularly a pressure higher than 7 or 8 bar, for instance a pressure in the range of 8 - 15 bar. The pressure of the product present during use in the flow-through space 15b is in particular lower than the pressure in the intermediate space 15d (for instance at least 1 bar lower), such that air present in the intermediate space 15d enters the product uniformly via the pores (which is indicated with arrows T). In this manner, fine air bubbles can be homogeneously introduced into the product P for the purpose of foam formation.

The static mixer 7 can be designed in different manners. The static mixer is in particular not provided with moving parts, this contrary to for instance a dispersing apparatus provided with moving parts such as a turrax or rotorstator mixer. Fig. 3 shows a non-limitative example, wherein the mixer 7 is provided with a flow-through space 7b surrounded by a holder 7a, which space 7b is filled with substantially static obstructions 7c (for instance substantially round obstructions, for instance provided with smooth surfaces, for instance granules or glass marbles 7c). Supply and discharge of product to/from the space 7b is indicated with arrows Q2, Q3. The obstructions allow the product to pass a large number of non-straight paths through the space 7, between an entrance 7i and exit 7u of the mixer 7. Another advantageous static mixer is for instance provided with flow velocity influencing walls or the like, for instance with helical walls or the like.

The system is provided in particular with or is connectable to a gas supply for supplying gas under superatmospheric pressure to the microfiltration device 15, and preferably also to the holder H. Gas supply to the system is indicated in Fig. 1 with an arrow Y. Pumping means (for instance with a compressor) and/or a gas reservoir brought to excess pressure (for instance a gas cylinder) may be provided for effecting gas supply. The system can for instance comprise regulating means 51, 52 for regulating flow rates and/or pressure of gas to be supplied to the holder H and filtration device 15. The supply comprises, for instance, a supply line 2, provided with a line part connected during use to a suitable gas inlet 3 of the holder 4, and at least a line part connected during use to a filtration device 15 for supplying gas thereto. The gas may comprise one or more gases, a gas mixture, nitrogen, air or the like.

Optionally, the holder H is provided with a pressure release valve (not represented) for rendering the pressurized holder H pressureless.

The present exemplary embodiment is designed to supply the same gas to the holder H and filtration device 15. Alternatively, gas supply means can be designed to supply, for instance, a first gas to the holder and a second gas, different from the first gas, to the filtration device 15. In addition, the system can for instance be designed otherwise for effecting product flow, for instance by providing the system with pumping means for pumping product P from the holder H through the discharge.

Use of the system shown in Figs. 1- 3 comprises for instance a method for dispensing product P coming from the holder H (for instance a substantially gasless product) with which gas is supplied to the product P via the microfiltration device 15.

Preferably, the product P that is supplied to the filtration device is not heated. The product may be cooled (for instance to a temperature which is lower than a holder ambient temperature) or have an ambient temperature.

The temperature of the gas (or gas mixture) to be supplied to the filtration device can for instance be an ambient temperature, for instance room temperature. The gas temperature can for instance be in the range of 0 - 50°C.

Here, the preferably not yet foamed product P is passed, for instance under the influence of gas supplied via the supply 2, from the holder H, to be passed via the discharge 6 through the filtration device 15 and then through the mixer 7. Here, the product is in particular passed through the tube inner space 15b of the microfiltration device 15 (here, the product flows along the filtration wall 15a) while gas is injected via the microfiltration wall 15a (at least straight through the wall) into the product for the purpose of bubble formation in the product (to that end, gas is supplied from the gas supply space 15d to the pores). A pressure prevailing in the gas supply space 15d is for instance higher than a pressure of the product P flowing along the filtration wall 15a. A flow rate of the product flowing through the filter 15 can for instance be higher than 10 liter/hour, and be in the range of, for instance, approximately 20-100 liter/hour (for instance 20-50 liter/hour) or a different range.

Good results are obtained if the gas is introduced via the filtration device 15 into the product P under the influence of a pressure of more than 2 bar, for instance a pressure in the range of more than 5 bar, in particular a pressure higher than 7 or 8 bar, for instance a pressure in the range of approximately 8 - 15 bar. A flow rate of the gas may be greater than 10 liter per hour, and can for instance be in the range of approximately 30-600 liter/hour (for instance 50-300 liter/hour and more particularly 100-300 liter/hour) or have a different value. The ratio product flow rate: gas flow rate can be between, for instance, 1:1- 1:10, in particular 1:1-1:5, for instance 1:1.5 - 1:5 or another ratio.

Then (i.e. downstream of the microfiltration device 15) the product P undergoes a mixing treatment, which is performed by the static mixing device 7. The product coming from the mixer 7 (product outflow via an optional outflow line 66 is indicated in Fig. 1 with arrow Q4) appears to be able to contain a particularly durable, stable foam, which can for instance be foamed particularly homogeneously if the product itself is a foamable product. Furthermore, the system can be of particularly compact, durable and relatively simple design to obtain such a result.

Example 1

The volume increase of the product after foaming is often represented with the term "storage percentage" or "overrun". The storage percentage gives the volume increase of the product P after foaming with respect to the volume of the non-foamed product and can be represented as:

$$\text{Storage} = \frac{W_p - W_s}{W_s} \times 100\%$$

wherein Wp represents the mass of a fixed volume of unfoamed product and $W_s$ the mass of the same volume of foamed product. Thus, a storage percentage of 100% means that a volume of 100 ml after dispensing has increased to 200 ml.

The product firmness can be expressed in Stevens (in g; "Stevens hardness"), which strength or firmness is determined as the maximum resistance against deformation during pressing a cylindrical cone having a diameter of 2.54 cm into a sample to a depth of 20 mm at a speed of 1 mm/s.

In a first experiment, semi-skinned milk (Friesche Vlag Lang lekker) was foamed with a micro-filter set up as schematically represented in Fig. 1, however, without the mixing device 7. Different product flow rates and gas flow rates were used.

As microfiltration device 15, a ceramic tubular membrane is used with a pore size of 1400 nm (symmetrical, with a ratio outer diameter:inner diameter of 4 mm:3 mm, a tube length of 20 cm, a pore size 1.400 nm, of Hyflux CEPAration). For the purpose of the experiment, the following parameters were measured: product flow rate, gas flow rate, pressures P1 (pressure in the holder), P2 (pressure in the product feed-through channel before the microfiltration device) P3 (pressure on the gas side of the microfiltration device (intermediate space)), and P4 (pressure in the product feed-through channel behind the microfiltration device) and the resulting product overrun. Table 1 shows the result of this experiment.

Table 1; result of the first experiment.

| P1 [bar] | P2 [bar] | P3 [bar] | P4 [bar] | Product flow rate [liter/hour] | Gas flow rate [liter/hour] | Overrun [%] |
|---|---|---|---|---|---|---|
| 2 | 1.65 | 2.8 | 1.0 | 90 | 40 | 40 |
| 2 | 1.75 | 3.2 | 1.0 | 70 | 70 | 80 |
| 2 | 1.8 | 3.4 | 1.1 | 60 | 95 | 125 |

The foams produced in the first experiment have a fine bubble structure and are homogeneously foamed. After mixture of foamed product with, for instance, hot coffee, a fine foam layer is formed on the mixture which remains present as fine foam for at least 15-30 minutes.

Example 2

A milk cream (35% fat, 10% sugar, pasteurized, non-homogenized) was foamed (at a temperature lower than 10°C) with the set up as schematically represented in Fig. 1, including the mixing device. The mixing device 7 comprised a helical mixer with a diameter of 6.4 mm and a length of 32 elements (140 - 632; TAH industries).

Different product flow rates and gas flow rates were used.

Three different microfiltration devices 15 are utilized, i.e.:

I) a ceramic tubular membrane with a pore size of 800 nm (symmetrical, ratio outer diameter:inner diameter of 4 mm: 3 mm, length 20 cm);

II) a ceramic tubular membrane with a pore size of 500 nm (asymmetrical, outer diameter/inner diameter 4 mm/ 3mm, length 20 cm), and;

III) a ceramic, tubular membrane with a pore size of 200 nm (symmetrical, outer diameter/inner diameter 3 mm/ 2mm, length 20 cm (each of Hyflux CEPAration).

Measured were the product flow rate, the gas flow rate, the pressures P1, (pressure in the holder) P2 (pressure in the product feed-through channel 6 before the microfiltration device) P3 (pressure on the gas side of the microfiltration device (intermediate space 15d)) and P4 (pressure in the product feed through channel behind the microfiltration device 15)), the resulting product overrun and firmness. Tables 2 - 4 show the result with regard to the three filters, from which it appears that variant/diverse foaming properties can be achieved.

Table 2: Results experiment 2 with filter pore size: 800 nm

| Product flow rate [liter/hour] | Gas flow rate [liter/hour] | P1 [bar] | P2 [bar] | P3 [bar] | P4 [bar] | Overrun [%] | Firmness [g Stevens] |
|---|---|---|---|---|---|---|---|
| 20 | 45 | 6.2 | 3.9 | 5.2 | 3.0 | 138 | 99 |
| 20 | 60 | 6.4 | 4.4 | 5.7 | 3.4 | 125 | 144 |
| 20 | 70 | 6.8 | 4.6 | 5.9 | 3.6 | 121 | 156 |
| 40 | 125 | 7.7 | 5.9 | 7.2 | 4.5 | 115 | 148 |
| 40 | 155 | 8.1 | 6.3 | 7.6 | 4.8 | 108 | 179 |

Table 3: Results experiment 2 with filter pore size: 500 nm

| Product flow rate [liter/hour] | Gas flow rate [liter/hour] | P1 [bar] | P2 [bar] | P3 [bar] | P4 [bar] | Overrun [%] | Firmness [g Stevens] |
|---|---|---|---|---|---|---|---|
| 20 | 55 | 5.3 | 3.8 | 6.0 | 2.8 | 130 | 110 |
| 20 | 70 | 6.7 | 4.2 | 6.6 | 3.2 | 121 | 140 |
| 20 | 130 | 7.1 | 4.7 | 7.3 | 3.6 | 96 | 185 |
| 40 | 90 | 7.0 | 5.1 | 7.4 | 3.6 | 112 | 109 |
| 40 | 110 | 7.4 | 5.5 | 7.8 | 4.0 | 114 | 132 |
| 40 | 185 | 8.1 | 6.2 | 8.8 | 4.7 | 102 | 172 |

Table 4: Results experiment 2 with filter pore size: 200 nm

| Product flow rate [liter/hour] | Gas flow rate [liter/hour] | P1 [bar] | P2 [bar] | P3 [bar] | P4 [bar] | Overrun [%] | Firmness [g Stevens] |
|---|---|---|---|---|---|---|---|
| 20 | 35 | 8.7 | 6.2 | 10.4 | 3.2 | 130 | 111 |

(continued)

| Product flow rate [liter/hour] | Gas flow rate [liter/hour] | P1 [bar] | P2 [bar] | P3 [bar] | P4 [bar] | Overrun [%] | Firmness [g Stevens] |
|---|---|---|---|---|---|---|---|
| 20 | 45 | 8.9 | 6.6 | 10.8 | 3.4 | 140 | 129 |
| 20 | 55 | 9.2 | 7.0 | 11.6 | 3.9 | 132 | 175 |
| 40 | 75 | 10.5 | 8.7 | 12.6 | 4.2 | 123 | 150 |
| 40 | 95 | 10.8 | 9.1 | 13.4 | 4.5 | 122 | 187 |

Second exemplary embodiment

Fig. 4 shows an example of a system for dispensing a homogeneous foamed product. In this case, the system is provided with an optional filter/mixer configuration, schematically shown in Figs. 1-3.

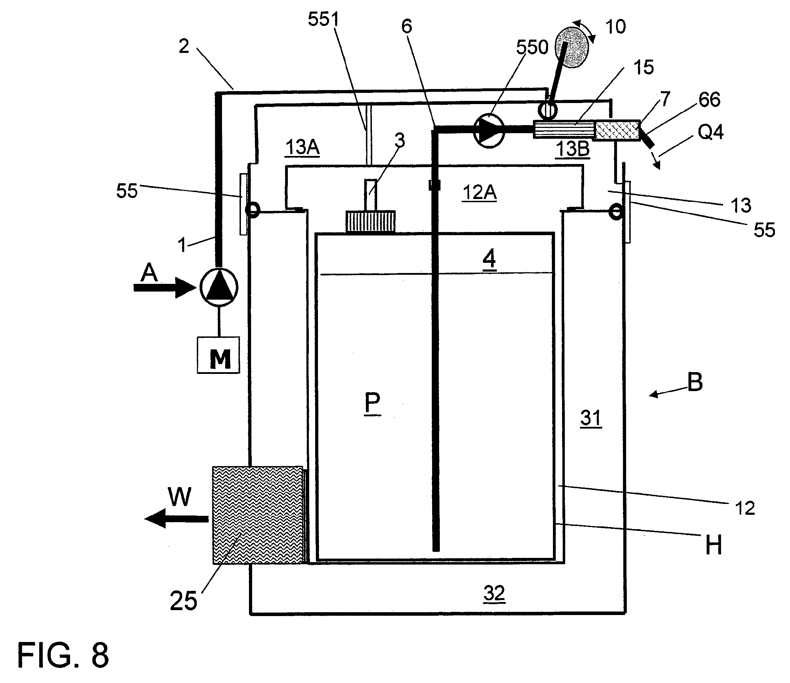

The system shown in Fig. 4 is provided with at least one product holder H, which is provided with product P, wherein the holder H is provided with product discharge means 6 for discharging product from the holder H under the influence of fluid supplied to the holder H (and which is also used for foaming the product). Fig. 8 shows an alternative system, provided with a pump 550 for discharging product from the holder H.

The holder H can be designed and formed in different manners. An inner space 4 surrounded by the holder H can already be at a superatmospheric pressure (for instance at least 2 bar) before the holder H is placed in the operating device B. According to an advantageous elaboration, neither the product nor the holder H is provided with propellant, and the inner space 4 of the holder H is substantially at an atmospheric pressure, or a pressure of less than 2 bar, before the holder H is brought in the position for cooperation with the operating device B.

In the present, second exemplary embodiment, the product discharge means 6 are preferably provided with a flexible hose 6, which is preferably integrally (i.e. undetachably) connected to the holder H. Alternatively, the hose 6 of the holder H is uncouplable, for instance for the purpose of cleaning.

An upstream part of the present hose 6 reaches towards a bottom of the holder H and is located adjacent the bottom, or is at the bottom, for discharging product P when the holder is almost empty.

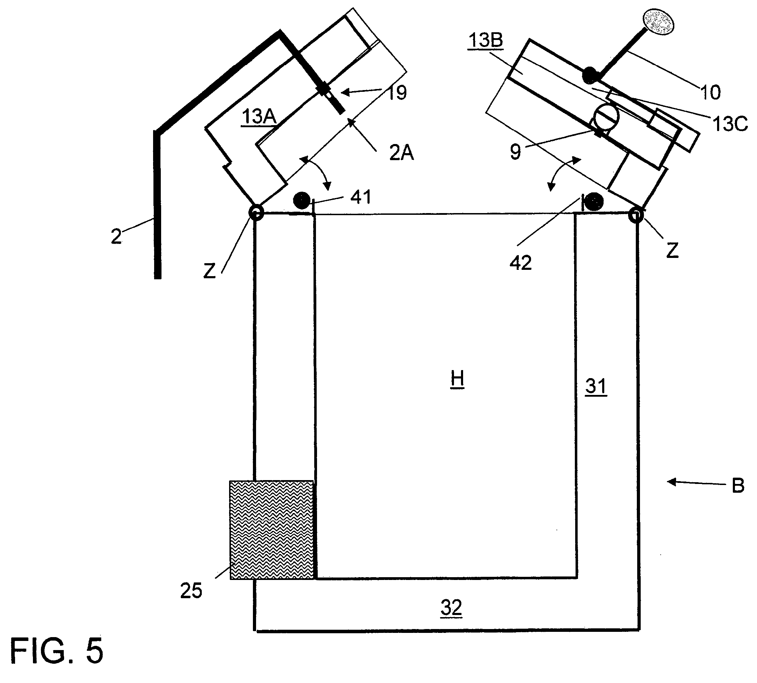

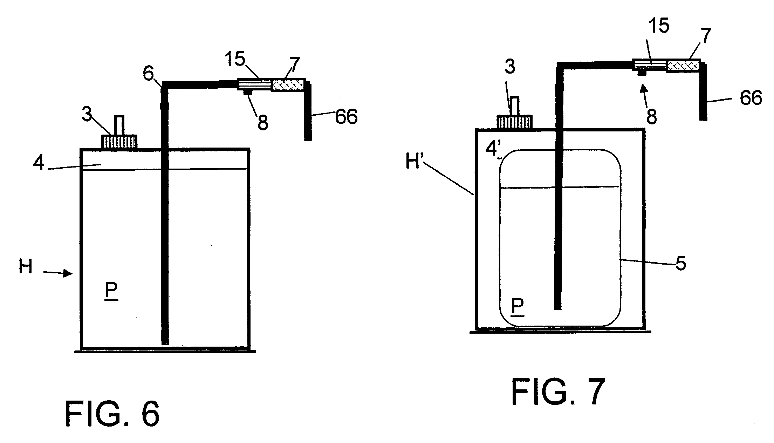

The system is further provided with an operating device B which is designed to cooperate with the holder H when the device B and holder H have been brought from, for instance, a spatially separated storage position or transport position shown in Figs. 5, 6 to the position for mutual cooperation represented in Fig. 4.

The operating device B is provided with operating means 10 for operating the product discharge means 6 of the holder H, and with fluid supply means 1, 2 for supplying the fluid to the holder H (and microfiltration device).

The operating means 10 can be designed in different manners. In the exemplary embodiment, the operating means 10 of the operating device B comprise, for instance, a pivotal operating handle. The operating means 10 can be designed to cooperate with the hose 6, in particular for squeezing tight a part of the hose 6 and for sealing off the fluid supply 9 in a first position (not represented) and releasing it in the second position shown in Fig. 4, for preventing and allowing the passage of product P, respectively (i.e. for the purpose of regulating the product dispensing). In this manner, a part of the hose 6 serves as valve means, or valve, which can be operated by the operating means 10 (with the system in assembled position).

Alternatively, the device B may comprise automated operating means (for instance with a dosing control, an actuator or motor, and/or be provided with, for instance, a user interface, for instance with an operating button for switching the system on and off) for regulating product discharge via the hose 6 and fluid supply to the microfiltration device.

Further, the product discharge means 6 can for instance be provided with valve means or sealing means (not represented) for sealing off a respective product discharge channel during transport and/or storage of the holder H (when the holder H is not in the device B).

The fluid supply means 1, 2 can be designed in different manners and comprise, for instance, a fluid reservoir (for instance a gas container) which is integrated with the device B or is connectable thereto for supplying the fluid via the device B to the holder H. A fluid reservoir (not represented) can contain, for instance, a fluid brought to a superatmospheric pressure suitable for use, be refillable or not, and/or be provided with fluid pump means for supply and/or discharge of fluid, or be designed otherwise, which will be clear to the skilled person.

In the exemplary embodiment, the fluid supply means comprise a compressor 1, (provided with a respective drive M) and a supply line 2.

In the following, air is described as the fluid to be supplied, however, according to an alternative embodiment, the fluid can comprise for instance a gas, gas mixture, nitrogen or in certain cases also a liquid.

The present compressor 1 is designed to supply ambient air to the line 2, and keep it at a substantially constant superatmospheric pressure. Drawing in ambient air by compressor 1 is indicated in Fig. 4 with arrow A. The superatmospheric pressure is for instance higher than approximately 2 bar, preferably higher than approximately 5 bar. According to a further elaboration, the pressure is higher than 7 or 8 bar, for instance a pressure in the range of approximately 8 - 15 bar.

The compressor 1 can be provided with or be connected to, for instance, a pressure regulator, for keeping air pressure downstream of the compressor 1 (for instance in the line 2 and/or in a space 12A surrounded by device B) at the desired value.

The present holder H is provided with a fluid entrance 3, for instance a valve 3, for supplying (in this case) air to an inner space 4 surrounded by the holder for bringing this space 4 at a desired pressure. The air supply means 1, 2 of the operating device B are designed to cooperate with the fluid entrance of the holder H for the supply of air (this supply is indicated in Fig. 4 with arrow F1). Optionally, the entrance 3 is provided with a sterile filter.

The operating device B may be provided with a cavity 12 sealable by a cover 13, in which the holder H is removably placeable. Preferably, the cavity 12 is hermetically sealable from the surroundings by means of the cover 12, for forming a pressure chamber from the cavity 12. To this end in particular sealing means 41, 42 (for instance a resilient sealing ring 41 and a respective  sealing flange 42) which can hermetically (i.e. gas-tightly) seal off a gap between the cover 13 and a sidewall 31 of the device B.

Optionally, the device B is provided with a pressure release valve (not represented) for rendering a pressurized pressure chamber pressureless. It will be clear to the skilled person how such a pressure release valve can be designed.

The cover may be pivotally (for instance about a pivot Z) or otherwise moveably or detachably couplable to a remaining part (for instance the sidewall 31) of the operating device B. Schematically represented locking means 55 can be provided for locking the cover 13 in its closed position.

Preferably, the cover 13 is provided with means 13C for engaging a part of the product discharge means 6 of the holder H and/or applying a clamping force/holding force thereto, when the holder H is provided in the operating device B. The cover may be provided with a slot closable by a cover segment for receiving a part of the product discharge means 6, and/or be designed otherwise. As represented in Fig. 4, in particular a filter 15 and mixer 7 of the product discharge means 6 can be detachably provided on/in the cover 13, when the system is in the operative condition. However, such a system can also not be provided with such a filter 15 (and/or mixer 7).

The cover 13 as such can for instance comprise a composite cover and consist of, for instance, at least two cover parts 13A, 13B which are separable from each other, for the purpose of uncoupling the product discharge means 6. In that case, the two cover parts 13a, 13B are preferably hermetically interconnectable for gas-tightly sealing off the cavity 12 from the surroundings, in the closed position shown in Fig. 4. Fig. 5 shows, for instance, two cover parts 13a, 13B that can pivot apart.

The present cover 13 is provided with a downstream part 2A of the air supply means. The present holder H is designed to cooperate with the downstream part 2A of the air supply means, in the position placed in the cavity and with a closed cover (see Fig. 4), for receiving air.

In an advantageous manner, in the present elaboration, the air supply means 1, 2 are also arranged for supplying the air supplied by the compressor 2 to a surrounding of the holder H present in the device B, in particular to a space 12A (see Fig. 4) located between the holder H and operative device B, with the holder H and operating device B in the cooperating position. To this end, the downstream part 2A of the supply line 2 is for instance provided with an air outlet 19 (optionally comprising a valve or valve means; outflow of air from this outlet 19 is indicated in Fig. 4 with arrow F2).

The configuration of the valve 3 and outlet 19 can for instance be such that air pressures in the holder inner space 4 and the space 12A enclosed between the holder H and operating system B are substantially equal, or, indeed, differ from each other.

With the holder H shown in Figs. 4, 5 the product P is in the inner space 4 so that air supplied via the valve 3 to the inner space 4 comes into contact with the product P in this space.

Fig. 7 shows an alternative elaboration with which the inner space 4' of the holder H' is provided with a space surrounded by an outer wall, which space is provided with a flexible bag 5 filled with the product. It is thus avoided that air supplied via valve 3 to the inner space 4' can come into contact with the product P present in the bag 5. This is in particular advantageous when the shelf-life of the product P is limited under the influence of contact with air. In this case too, the product P, located in the bag 5, can for instance be provided with a propellant and/or blowing agent (for instance nitrogen oxide or the like) for instance at a pressure of at least 2 bar (absolute) and for instance at most 8 bar).

Preferably, the product discharge means 6 (of the holder H) are designed for introducing gas bubbles into the product P, in particular for forming a homogeneous (optionally monodisperse) foam. Monodisperse foam is a foam in which the bubbles present in the foam have substantially the same  sizes. The present product discharge means 6 are provided with a gas inlet 8 which, in the position for cooperation, is connected to the gas supply 9 of the operating device B, for supplying air coming from the gas supply 9 to the product P. Supply of air to the operating means 6 (via supply 9 and inlet 8) is indicated in Fig. 4 with arrow F3. In the exemplary embodiment, this supply 9 is located in a part of the cover 13, and is upstream in fluid communication with the cavity 12A for receiving air therefrom. Alternatively, the supply 9 may be connected via a separate air line to the compressor 1. The present supply 9 is further provided with an optional valve means 9 which is in an opened position during product dispensing (see Fig. 4) and can be brought to a closed position (shown in Fig. 5). Optionally, valve means 9 of the gas supply can be coupled to the operating means 10, to be operated under the influence of the operating means 10.

As mentioned, the product discharge means 6 of the holder H may be provided with a static mixing device 7 for agitating the product during discharge (see also Figs. 1, 3). It is further advantageous when the product discharge means 6 are provided with a filtration device 15 (see Fig. 1, 2) which is connectable to the fluid supply 9 for supplying air to the product P flowing through the device 15 (i.e. dispersing it in the product flow). Good results are obtained when the static mixing device 7 is disposed downstream of the filtration device 15. The mixer 7 and the filtration device 15 may comprise an integral (undetachable) part of the product discharge means 6, and can for instance both be manufactured from disposable and/or dishwasher proof material. Alternatively, the mixer 7 and the filtration unit 15 are uncouplable from the hose 6.

The filtration unit 15 and mixer 7 can for instance be designed as described on the basis of the first exemplary embodiment shown in Figs. 1 - 3.

During use, the downstream disposed static mixer 7 can provide a further (firming) treatment of the foam formed by means of the filtration device 15, so that a particularly homogeneous, stable, firm and homogeneous foam is obtained, which is dispensed, during use, by a downstream part 66 (for instance outflow line 66) of the discharge means 6 (according to arrow Q4 in Fig. 4). The static mixer 7 as such can furthermore be designed for providing a pressure drop (of for instance more than 1 bar, in particular more than 2 bar) such that the pressure of the product P at the entrance 7i of the mixer 7 is relatively high (for instance substantially equal to a pressure prevailing in the filter flow-through space 15b), while the pressure in the exit of the static mixer 7u is relatively low (for instance virtually atmospheric). In particular, during use, the product P is pressed through the mixer 7 under the influence of an upstream (generated under the influence of the compressor 1) thrust (i.e. an air pressure generated in holder space 4).

In an alternative embodiment, the system shown in Figs. 4 - 7 is not provided with a filtration device 15. In that case, the static mixer 7 as such can for instance be provided with air supply means for supplying air to product P flowing through the mixer 7.

According to a further elaboration, downstream of the microfiltration device 15, a pressure reducing device can be provided, for instance an outflow line 66, in which the pressure of the product is slowly reduced in the flow direction (when using an outflow line through, for instance, gradual increase of the diameter of the line). This prevents damage of the foamed product. The pressure reducing device can for instance comprise a restriction of the discharge hose 6, for instance a restriction provided in the hose as such, or a restriction of the hose effected by a clamping force of the operating device.

Use of the pressure reducing device is for instance advantageous if no mixing device disposed downstream relative to the microfiltration device is used (such a configuration is not represented as such). In that case, the pressure reducing device can for instance be disposed directly downstream relative to the microfiltration device 15.

The pressure reducing device 66 can for instance be designed to have the pressure of the product gradually decrease, in particular without then carrying out an agitation and/or mixing treatment on the product.

Preferably, the operating device B is designed to cool the holder H and a substantial part of the product discharge means in the cooperating position mentioned, preferably such that the product in the holder 3 is lower than 10°C, in particular lower than 5°C and that the product discharged during use is higher than 0°C. To this end, the exemplary embodiment is provided with a cooling system 25 (schematically represented). The cooling system 25 can for instance be designed to withdraw heat from the cavity 12, surrounded by the device B, and/or from the holder H and to discharge it to a surrounding, and can for instance be provided with a cooling circuit known per se, heat emitting ribs (with or without external air convection), heat transferring means (for instance with Peltier elements) and the like. Discharge of heat is indicated in Fig. 4 with arrow W.

Preferably, the operating device B is designed to thermally insulate a product holder H disposed in the device B from a surrounding. To this end, the device B may be provided with a relatively thick, thermally insulating cover 13, sidewall 31, and bottom 32. To this end, cover 13, sidewall 31 and bottom 32 can for instance be provided with suitable insulating material, or offer thermal insulation in a different manner, which will be clear to the skilled person.

Fig. 4 shows a use of the system, comprising a method for dispensing the product P. In Fig. 4 a holder H not provided with an inner bag is arranged in the operating device B. Alternatively, for instance a holder H' according to the example shown in Fig. 7 can be utilized.

For the purpose of use, the holder H filled (at least partly) with product P can be brought into the position for cooperation with the operating device B, in the cavity 12, while the cavity 12 is hermetically sealed off from a surrounding by the cover 13. The placement of the holder H is in particular such that the dosing handle 10 can cooperate with the hose 6 for dosing the dispensing of product. Furthermore, via closure of the cover 13 (or cover parts 13A, 13B) valve 3 of the holder can be brought into contact with the compressor 1, via the supply line 2. After pulling the dosing handle, foamed product flows from the apparatus.

Under the influence of the expelling product P, the compressor 1 can for instance switch on for drawing in air, preferably via a filter (not represented), and pumping it into the holder H (or, for instance, into the space 4 between the bag 5 and holder wall, in case the holder shown in Fig. 7 is utilized). The compressor 1 can supply air for instance such that the pressure in the holder inner space 4 is equal to a particular (for instance superatmospheric) initial pressure in the holder 4, in particular independently of an amount of product P (still) present in the holder. This happens, for instance, at a speed such that the pressure in the holder H remains in accordance with a desired product quality (and is, for instance, never more than 0.5 bar below an initial pressure in the holder H). In this manner, product P with very constant quality can be dispensed by the system.

The compressor 1 can for instance be automatically activated for supplying air to the holder H, via the line 2 and the valve 3, for holding the pressure in the holder H at a desired (preferably substantially constant) value. In Fig. 4, the operating handle 10 is brought form a first operating condition into a second operating condition, for releasing the discharge hose 6 of the holder H for discharging product P via the hose.

During use, the present operating device B brings the air inlet 8 of the microfiltration filter 15 of the product discharge means 6 (of the holder H) also at a particular pressure (in this case via the air outlet 19 and gas supply 9) for introducing gas bubbles into the product via the filter 15.

In this case, use of the system comprises a method for dispensing homogeneous foamed product. As mentioned, air is supplied to the product P via the microfiltration wall 15a, in particular for forming a foamed and/or aerated product. Then, the product P provided with air bubbles undergoes a mixing treatment, under the influence of the static mixing device 7, while the mixing device can also gradually reduce an excess pressure of the product when the product flows through the mixing device 7.

In an advantageous manner, the static mixer 7 can effect that a stable product is obtained. In the case the product P is or comprises cream, use can be made of a cream in which the fat exhibits a tendency to partial coalescence. During dosing of cream, partial coalescence will take place in the static mixer 7, which leads to a more stable cream. Preferably, the holder H is conserved in the cavity 12 at a constant temperature, so that the risk of partial coalescence before expelling is strongly reduced.

As follows from the above, during use, preferably, air is added to the product P, via the product discharge 6. In case the product P is or comprises cream, this embodiment also leads to a more stable cream because of the (partial) use of nitrogen for foaming the cream. In this embodiment, no or relatively little expellant gas/blowing agent (for instance nitrogen oxide) already dissolved in the product will be required. In that case, the pressure in the holder H, before the holder is coupled to the operating device B, can for instance be a substantially atmospheric pressure.

When the holder H is for instance empty, the holder H is removed from the operating device B, and can for instance be discarded or recycled. Then, a new, (full) holder H can be brought into the position for cooperation with the operating device B, for the purpose of continuing dispensing of the product.

In the above embodiments of the second exemplary embodiment, there is preferably no contact between the product P and the dosing system 10 (of the operating device B). After exiting the holder H, the product P preferably only touches the flexible hose 6, the flow-through channel of the filter 15 and the static mixer 7. This renders the system highly user friendly because the dosing system can for instance not be contaminated with product.

Third exemplary embodiment

Fig. 8 shows an alternative embodiment, which is distinguished from the configuration in Fig. 4 in that the system is provided with a pump 550 (instead of fluid supply means) for pumping product from the holder, and discharging it via the product discharge means 6. The pump 550 may form part of a cover, of the product discharge means 6 or of another part of the system. In this case, the cavity in which the holder H is receivable is for instance not a pressure chamber. As shown in Fig. 8, supply line 2 can for instance be connectable, around the cavity, to the product discharge means 6 (for instance to a microfiltration device 15 thereof). The pump 550 can be designed in different manners, which will be clear to the skilled person, and for instance comprise a hand pump, or a motor driven product pump (with the motor being an electric motor), and preferably a hose pump. In this case, the holder H can be provided with a valve 3 for supplying air (or a different gas or gas mixture) to the holder inner space during discharge of product from the holder H. The device (for instance the cover 13 as in Fig. 8, or the sidewall 31) may be provided with one or more passages 551 for supplying air from a surrounding to the holder H (in particular the valve 3 thereof). Such an aeration channel 551 can for instance extend along a boundary between two cover parts 13A, 13B in particular if the cover 13 comprises for instance different cover segments.

The operation of the example shown in Fig. 8 differs from the operating of the system according to Fig. 4 in that during use, the pump 550 pumps the product from the holder H and discharges via the discharge 6 (in particular through the microfiltration device 15 and processing device 7). Air can be directly supplied by the compressor via the line 2 to the microfiltration device 15, to be injected into the product flowing through this device, in particular for the purpose of foam formation.

Fourth embodiment

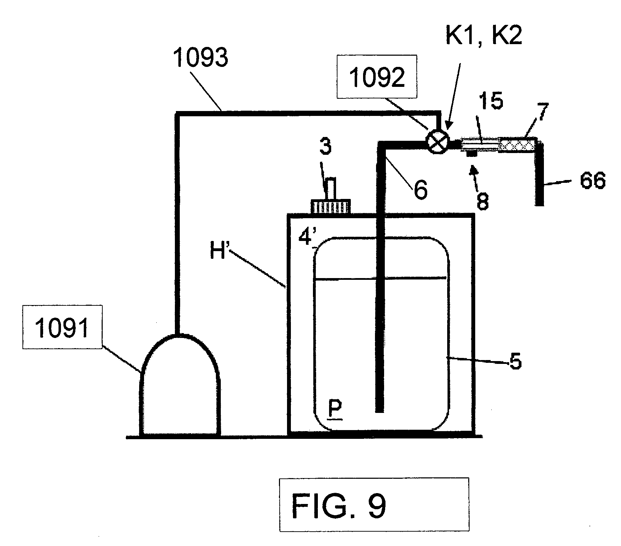

Fig. 9 shows a further embodiment of a system according to the invention. This elaboration comprises for instance applying (hot) steam to the product discharge means 6, via for instance operable valve means 1092.

This elaboration differs in particular from the system shown in Fig. 8 in that an operable valve device 1092 is placed upstream of the mixing and/or microfiltration device. Preferably, the valve device forms an integral part of the product discharge means 6.

The valve device 1092 may comprise two valves K1 and K2, and has, for instance, three positions, i.e. a first position, a second position and a third position. The valve device 1092 can also be designed otherwise. A first valve K1 of the valve device 1092 regulates the through-flow of product from the holder H' to the microfiltration device. A second valve K2 of the valve device 1092 regulates a supply of a different means, in particular a heated medium, to the product discharge means 6 (for instance simultaneously with flow of product by the product discharge means 6, or, conversely, when no product flows through the product discharge means 6).

The system may be provided with a heated medium provider 1091, for instance a steam generator 1091, hot water provider, a flow-through heating device or the like, which is preferably connectable by a respective exit to an entrance of the valve device 1092 (as shown in the drawing, via a suitable supply line 1093). The heated medium provider 1091 can form part of an above-mentioned operating device B, or comprise a separate device 1091.

The first position of the valve device 1092 comprises for instance the passage of only product P to be foamed (coming from the holder H") while the product is foamed cold. Here, only valve K1 of the valve device is open and valve K2 is closed (at least the first valve K1 is in a position for allowing the passage of product and the second valve K2 is in a position for closing the entrance to the line 1093).

The second position of the valve device 1092 comprises for instance adding a heated medium preferably a heated gas or gas mixture, in particular hot steam, to the product, so that the product is foamed in heated condition. To this end, both valves K1 and K2 are open (at least the first valve K1 is in a position for allowing passage of product, and the second valve K2 is in a position for allowing the passage of medium coming from the line 1093 to the product discharge means 6).

The third position of the valve device 1092 may comprise the passage of a heated medium only (for instance steam) dispensed by the provider 1091, in particular for cleaning the mixing and/or microfiltration device. In the third position, only valve K2 is open and valve K1 is closed (at least, the first valve K1 is in a closed position for blocking flow of product, and the second valve K2 is in a position for allowing the passage of medium coming from the line 1093 to the product discharge means 6.)

The configuration shown in Fig. 9 can for instance be utilized in combination with one or more of the exemplary embodiments shown in Figs. 1 - 8 or independently thereof.

It is self-evident that the invention is not limited to the above-described exemplary embodiments. Various modifications are possible within the framework of the invention as set forth in the following claims.

For instance, the product P can comprise an edible or not edible protein, a protein mixture or protein solution. An edible protein solution can comprise, for instance, a milk protein, a whey protein and casein, egg white proteins, yeast isolate, soy protein, hemoglobin, vegetal protein isolate, meat protein, collagen, gelatin and the like.

The product may be homogeneously or not homogeneously foamed.

The product can further contain various substances, for instance a thickener, colorants, flavorants and the like.

The product is further in particular a food, for instance a beverage, juice, soda, yogurt drink or the like. The product can further comprise, for instance, vegetal or animal fat or oil, a thickener, sugar, sweeteners, flavorants, colorants and/or the like, and/or various other ingredients, which will be clear to the skilled person. The product can also be a non-consumable product, a product for personal hygiene, a hair treating product, or the like.

The dispensed product can further be a hot product. The method and system according to the invention can for instance utilize or be provided with heating means (for instance a heating system) for heating the product. The heating means can for instance be designed to heat the product flowing through the product discharge means 6, and/or to heat gas to be supplied to the product, and/or to heat an optional mixing device and/or microfiltration device and the like.

In addition, the method (and the system) can utilize at least two product flows (two product parts), a first product part being foamed by a present method (or the system, respectively) and then combined (by the method or the system, respectively) with a second, non-foamed product part (and for instance mixed therewith). The product discharge means 6 may be provided with a branch, to provide, from this branch a first product flow and a second product flow separated therefrom. The first product flow is then foamed, and thereupon reunited with the second product flow (and for instance mixed therewith).

Further, preferably static means are utilized for instance a static microfiltration filter and an optionally static membrane. In an alternative embodiment, a moving filter (and/or optionally dynamic membrane) can be utilized.

**Claims**

1. A method for dispensing a foamed product (P), for example a food product, **characterized in that** product is supplied to a microfiltration device (15), gas is supplied via the microfiltration device (15) to the product (P), and that the product (P) downstream of the microfiltration device (15):

   - undergoes a mixing treatment; and/or
   - undergoes a controlled pressure reduction.

2. A method according to any of the preceding claims, wherein the mixing treatment and/or pressure reduction is performed by a static mixing device (7).

3. A method according to any of the preceding claims, wherein the filtration device is provided with a filtration wall (15a) with gas transmissive pores having a pore size in the range of 0.1 - 10 microns, in particular a pore size of at least 0.1 micron and less than 2 microns.

4. A method according to claim 3, wherein the pore size is less than 1 micron.

5. A method according to claim 3 or 4, wherein the pore size is in the range of 0.2 micron to 0.8 micron.

6. A method according to any of claims 3-5, wherein the product flows along the filtration wall (15a) of the microfiltration device (15), while the gas is supplied from a gas supply space (15d) to said pores, to be supplied via the pores to the product (P).

7. A method according to claim 6, wherein a pressure prevailing in the gas supply space (15d) is higher than a pressure of the product (P) flowing along the filtration wall (15a).

8. A method according to any of the preceding claims, wherein the gas is introduced via the filtration device into the product (P) under the influence of a pressure of more than 2 bar, for instance a pressure in the range of more than 5 bar, in particular a pressure higher than 7 or 8 bar, for instance a pressure in the range of approximately 8 - 15 bar.

9. A method according to any of the preceding claims, wherein the filtration device (15) is provided with a microfiltration wall (15a) which separates a first space (15b) from a second space (15d), wherein the product (P) is supplied to the first space (15b) and the gas to the second space (15d) or vice versa, such that the gas can be injected via the microfiltration wall (15a) into the product (P).

10. A product dispensing system configured for carrying out a method according to any of the preceding claims, wherein the system is provided with a holder (H) which contains a product (P) to be dispensed, and product discharge means (6) for discharging product coming from the holder (H), wherein the product discharge means (6) are provided with a microfiltration device (15), the microfiltration device (15) being connected to a fluid supply for supplying gas to the product during discharge of product, wherein the product discharge means (6) are further provided with a processing device (7) which is arranged downstream of said microfiltration device (15) for performing a mixing treatment and/or pressure reduction treatment on the product provided with gas **characterized in that** the microfiltration device (15) is provided with a product entrance (15i) for receiving products.

11. A system according to claim 10, wherein the processing device is a static mixer.

12. A system according to any one of claims 10-11, wherein the microfiltration device (15) is provided with a microfiltration wall (15a) having gas transmissive pores, for instance a tubular wall, which separates a gas supply space (15d) from a product feed-through channel (15a).

13. A system according to claim 12, wherein a length of the product feed-through passage (15b) measured in a product flow direction is at most 50 cm, for example a length that is at most 20 cm, and more particularly is in the range of approximately 5 - 20 cm, for instance approximately 10 cm.

14. A system according to any one of claims 10-13, wherein the microfiltration device is provided with a filtration wall (15a) with gas transmissive pores with a pore size in the range of 0.1 - 10 microns, in particular a pore size of at least 0.1 micron and less than 2 microns, more particularly a pore size of at least 0.1 micron and less than 1 micron.

**15.** A system according to any one of claims 10-14, wherein the microfiltration device is provided with a housing (15) comprising the product entrance (15i) for supply of product (P), a gas inlet (8) for supply of gas, and an exit (15u) for discharge of product provided with gas, wherein said gas inlet (8) terminates in a gas receiving space (15d) which is separated by means of a microfiltration wall (15a) from said product entrance (15i) and exit (15u).

## Patentansprüche

**1.** Verfahren zur Ausgabe eines geschäumten Produkts (P), beispielsweise eines Lebensmittelprodukts, **dadurch gekennzeichnet, dass** das Produkt einer Mikrofiltrationsvorrichtung (15) zugeführt wird, dass dem Produkt (P) Gas über die Mikrofiltrationsvorrichtung (15) zugeführt wird und dass das Produkt (P) stromabwärts von der Mikrofiltrationsvorrichtung (15):

- einer Vermischungsbehandlung unterzogen wird; und/oder
- einer gesteuerten Druckverminderung unterzogen wird.

**2.** Verfahren nach einem der vorhergehenden Ansprüche, wobei die Vermischungsbehandlung und die Druckverminderung durch eine statische Mischvorrichtung (7) durchgeführt werden.

**3.** Verfahren nach einem der vorhergehenden Ansprüche, wobei die Filtrationsvorrichtung mit einer Filtrationswand (15a) mit gasdurchlässigen Poren mit einer Porengröße im Bereich von 0,1 - 10 Mikron, insbesondere einer Porengröße von mindestens 0,1 Mikron und weniger als 2 Mikron, versehen ist.

**4.** Verfahren nach Anspruch 3, wobei die Porengröße weniger als 1 Mikron beträgt.

**5.** Verfahren nach Anspruch 3 oder 4, wobei die Porengröße im Bereich von 0,2 bis 0,8 Mikron liegt.

**6.** Verfahren nach einem der Ansprüche 3-5, wobei das Produkt entlang der Filtrationswand (15a) der Mikrofiltrationsvorrichtung (15) fließt, während das Gas von einem Gaszufuhrraum (15d) den Poren zugeführt wird, um über die Poren dem Produkt (P) zugeführt zu werden.

**7.** Verfahren nach Anspruch 6, wobei ein in dem Gaszufuhrraum (15d) vorherrschender Druck höher ist als ein Druck des Produkts (P), das entlang der Filtrationswand (15a) fließt.

**8.** Verfahren nach einem der vorhergehenden Ansprüche, wobei das Gas über die Filtrationsvorrichtung dem Produkt (P) unter dem Einfluss eines Drucks von mehr als 2 Bar, zum Beispiel eines Drucks im Bereich von mehr als 5 Bar, insbesondere eines Drucks über 7 oder 8 bar, zum Beispiel eines Drucks im Bereich von ungefähr 8-15 Bar, zugeführt wird.

**9.** Verfahren nach einem der vorhergehenden Ansprüche, wobei die Filtrationsvorrichtung (15) mit einer Mikrofiltrationswand (15a) versehen ist, die einen ersten Raum (15b) von einem zweiten Raum (15d) trennt, wobei das Produkt (P) dem ersten Raum (15b) und das Gas dem zweiten Raum (15d) oder umgekehrt zugeführt werden, sodass das Gas über die Mikrofiltrationswand (15a) in das Produkt (P) injiziert werden kann.

**10.** Produktabgabesystem, konfiguriert zum Ausführen eines Verfahrens nach einem der vorhergehenden Ansprüche, wobei das System mit einem Halter (H), der ein abzugebendes Produkt (P) enthält, und Produktabgabemitteln (6) zum Abgeben eines von dem Halter (H) kommenden Produkts versehen ist, wobei die Produktabgabemittel (6) mit einer Mikrofiltrationsvorrichtung (15) versehen sind, die Mikrofiltrationsvorrichtung (15) mit einer Flüssigkeitszufuhr verbunden ist, um Gas während der Produktabgabe dem Produkt zuzuführen, wobei die Produktabgabemittel (6) ferner mit einer Verarbeitungsvorrichtung (7) versehen sind, die der Mikrofiltrationsvorrichtung (15) nachgeschaltet ist, um eine Mischbehandlung und/oder ein Druckverminderungsbehandlung an dem mit Gas versehenen Produkt durchzuführen, **dadurch gekennzeichnet, dass** die Mikrofiltrationsvorrichtung (15) mit einem Produkteingang (15i) für die Aufnahme von Produkt versehen ist.

**11.** System nach Anspruch 10, wobei die Verarbeitungsvorrichtung ein statischer Mixer ist.

**12.** System nach einem der Ansprüche 10-11, wobei die Mikrofiltrationsvorrichtung (15) mit einer Mikrofiltrationswand (15a) mit gasdurchlässigen Poren versehen ist, zum Beispiel mit einer röhrenförmigen Wand, die einen Gaszufuhrraum (15d) von einem Produktdurchfuhrkanal (15a) trennt.

13. System nach Anspruch 12, wobei eine Länge des Produktdurchfuhrdurchgangs (15b), gemessen in einer Produktfließrichtung, höchstens 50 cm beträgt, zum Beispiel eine Länge, die höchstens 20 cm beträgt, und insbesondere im Bereich von ungefähr 5-20 cm, zum Beispiel ungefähr 10 cm, liegt.

14. System nach einem der Ansprüche 10-13, wobei die Mikrofiltrationsvorrichtung mit einer Filtrationswand (15a) mit gasdurchlässigen Poren mit einer Porengröße im Bereich von 0,1-10 Mikron, insbesondere einer Porengröße von mindestens 0,1 Mikron und weniger als 2 Mikron, noch besser einer Porengröße von mindestens 0,1 Mikron und weniger als 1 Mikron, versehen ist.

15. System nach einem der Ansprüche 10-14, wobei die Mikrofiltrationsvorrichtung mit einem Gehäuse (15), das den Produkteingang (15i) zum Zuführen des Produkts (P) aufweist, einem Gaseinlass (8) zum Zuführen von Gas und einem Ausgang (15u) zum Ausgeben von mit Gas versehenem Produkt versehen ist, wobei der Gaseinlass (8) in einem Gasaufnahmeraum (15d) endet, der durch eine Mikrofiltrationswand (15a) von dem Produkteingang (15i) und dem Ausgang (15u) getrennt ist.

**Revendications**

1. Procédé pour distribuer un produit foisonné (P), par exemple un produit alimentaire, **caractérisé en ce que** le produit est alimenté vers un dispositif de microfiltration (15), du gaz est alimenté via le dispositif de microfiltration (15) au produit (P) et que le produit (P) en aval du dispositif de microfiltration (15) :

    - subit un traitement de mélange ; et/ou
    - subit une réduction de pression contrôlée.

2. Procédé selon l'une quelconque des revendications précédentes, dans lequel le traitement de mélange et/ou la réduction de pression sont effectués par un dispositif de mélange statique (7).

3. Procédé selon l'une quelconque des revendications précédentes, dans lequel le dispositif de filtration est pourvu d'une paroi de filtration (15a) avec des pores transmetteurs de gaz ayant une taille de pore dans la plage de 0,1 à 10 micromètres, en particulier une taille de pore d'au moins 0,1 micromètre et inférieur à 2 micromètres.

4. Procédé selon la revendication 3, dans lequel la taille de pore est inférieure à 1 micromètre.

5. Procédé selon la revendication 3 ou 4, dans lequel la taille de pore est dans la plage de 0,2 micromètre à 0,8 micromètre.

6. Procédé selon l'une quelconque des revendications 3 à 5, dans lequel le produit s'écoule le long de la paroi de filtration (15a) du dispositif de microfiltration (15), tandis que le gaz est alimenté depuis un espace d'alimentation en gaz (15d) vers lesdits pores, pour être alimenté via les pores vers le produit (P).

7. Procédé selon la revendication 6, dans lequel une pression appliquée dans l'espace d'alimentation en gaz (15d) est supérieure à une pression du produit (P) s'écoulant le long de la paroi de filtration (15a).

8. Procédé selon l'une quelconque des revendications précédentes, dans lequel le gaz est introduit via le dispositif de filtration dans le produit (P) sous l'influence d'une pression supérieure à 2 bars, par exemple une pression dans la plage de plus de 5 bars, en particulier une pression supérieure à 7 ou 8 bars, par exemple une pression dans la plage d'approximativement 8 à 15 bars.

9. Procédé selon l'une quelconque des revendications précédentes, dans lequel le dispositif de filtration (15) est pourvu d'une paroi de microfiltration (15a) qui sépare un premier espace (15b) d'un deuxième espace (15d), dans lequel le produit (P) est alimenté dans le premier espace (15b) et le gaz dans le deuxième espace (15d) ou inversement, de sorte que le gaz puisse être injecté via la paroi de microfiltration (15a) dans le produit (P).

10. Système de distribution de produit configuré pour conduire un procédé selon l'une quelconque des revendications précédentes, dans lequel le système est pourvu d'un support (H) qui contient un produit (P) à distribuer et des moyens de décharge de produit (6) pour décharger un produit provenant du support (H), dans lequel les moyens de décharge de produit (6) sont pourvus d'un dispositif de microfiltration (15), le dispositif de microfiltration (15) étant relié à une alimentation de fluide pour alimenter un gaz vers le produit pendant la décharge du produit, dans lequel les moyens de décharge de produit (6) sont en outre pourvus d'un dispositif de traitement (7) qui est agencé en aval dudit dispositif de microfiltration (15) pour effectuer un traitement de mélange et/ou un traitement de réduction de pression sur le produit alimenté avec du gaz, **caractérisé en ce que** le dispositif de microfiltration (15) est pourvu d'une entrée de produit (15i) pour recevoir des produits.

11. Système selon la revendication 10, dans lequel le dispositif de traitement est un mélangeur statique.

12. Système selon l'une quelconque des revendications 10 à 11, dans lequel le dispositif de microfiltration (15) est pourvu d'une paroi de microfiltration (15a) ayant des pores transmetteurs de gaz, par exemple une paroi tubulaire, qui sépare un espace d'alimentation en gaz (15d) depuis un canal de traversée de produit (15a).

13. Système selon la revendication 12, dans lequel une longueur du passage de traversée du produit (15b) mesurée dans une direction d'écoulement de produit est d'au plus 50 cm, par exemple une longueur qui est d'au plus 20 cm et est plus particulièrement dans la plage d'approximativement 5 à 20 cm, par exemple approximativement 10 cm.

14. Système selon l'une quelconque des revendications 10 à 13, dans lequel le dispositif de microfiltration est pourvu d'une paroi de filtration (15a) avec des pores transmetteurs de gaz avec une taille de pore dans la plage de 0,1 à 10 micromètres, en particulier une taille de pore d'au moins 0,1 micromètre et inférieure à 2 micromètres, plus particulièrement une taille de pore d'au moins 0,1 micromètre et inférieure à 1 micromètre.

15. Système selon l'une quelconque des revendications 10 à 14, dans lequel le dispositif de microfiltration est pourvu d'un boîtier (15) comprenant l'entrée du produit (15i) pour l'alimentation de produit (P), une entrée de gaz (8) pour l'alimentation en gaz et une sortie (15u) pour la décharge de produit pourvu de gaz, dans lequel ladite entrée de gaz (8) se termine dans un espace de réception de gaz (15d) qui est séparé au moyen d'une paroi de microfiltration (15a) depuis ladite entrée (15i) et ladite sortie (15u) de produit.

FIG. 1

EP 2 268 173 B1

FIG. 2

FIG. 3

FIG. 4

FIG. 5

FIG. 6

FIG. 7

FIG. 8

FIG. 9

**REFERENCES CITED IN THE DESCRIPTION**

**Patent documents cited in the description**

- EP 1061006 A1
- WO 2006078339 A
- NL 1024433
- NL 1024438